# EUROPEAN PATENT APPLICATION

(11) **EP 4 543 079 A1**
(43) Date of publication of application: **23.04.2025**
(21) Application number: 23850507.7
(22) Date of filing: 07.08.2023
(51) Int. Cl.: H04W 24/10, H04B 7/0413, H04W 24/08

(54) **METHOD AND DEVICE FOR RADIO RESOURCE MANAGEMENT (RRM) IN CONSIDERATION OF MULTIPLE INPUT MULTIPLE OUTPUT (MIMO) CAPABILITY OF TERMINAL**

(30) Priority: 05.08.2022 KR 20220097802
(71) Applicant: Samsung Electronics Co., Ltd., Suwon-si, Gyeonggi-do 16677 (KR)
(72) Inventor: JUNG, Byounghoon, Suwon-si, Gyeonggi-do 16677 (KR); JUNG, Sangyeob, Suwon-si, Gyeonggi-do 16677 (KR); JIN, Seungri, Suwon-si, Gyeonggi-do 16677 (KR)
(74) Representative: Gulde & Partner
(86) International application number: PCT/KR2023/011606
(87) International publication number: WO 2024/030008

(57) **Abstract**

The disclosure relates to a 5G or 6G communication system for supporting a higher data transmission rate.

According to the present disclosure, a terminal capable of multiple-antenna transmission and reception operations may measure transmission signals of an adjacent transmission terminal to perform more efficient mobility management operations.

## Description

### Technical Field

The disclosure relates to terminal and base station operations in a mobile communication system, and more particularly, to a detailed control method for a terminal capable of performing multi-antenna transmission and reception operations to measure a transmission signal of an adjacent transmission point and to perform a mobility management operation.

### Background Art

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Meanwhile, to enhance transmission and reception performance of a terminal in a wireless communication system, proposed is a method of transmitting and receiving information using massive MIMO technology using multiple antennas of a terminal and multiple transmission and reception points of a network. In case of a terminal capable of utilizing this, the need for new radio resource management (RRM) has emerged that considers MIMO performance of the terminal, which differs from the existing cell-based one.

### Disclosure

### Technical Problem

To enhance performance of a communication network in a wireless communication system, a new radio resource management (RRM) method that considers multiple input multiple output (MIMO) performance of a terminal is required.

### Technical Solution

To solve the above-described problems, a method performed by a base station in a wireless communication system according to an embodiment of the disclosure may include transmitting a control message including configuration information associated with a coordinated cell group (CCG) including a plurality of cells capable of performing layer 1 and layer 2 handover when a terminal moves between cells, the configuration information including information of the plurality of cells included in the CCG; and receiving measurement report for the CCG from the terminal in case that measurement for the CCG is performed by the terminal and a reporting condition for the measurement is satisfied.

A method performed by a terminal that supports MIMO in a wireless communication system according to another embodiment of the disclosure may include receiving a control message including configuration information associated with a CCG including a plurality of cells capable of performing layer 1 and layer 2 handover when the terminal moves between cells, the configuration information including information of the plurality of cells included in the CCG; performing measurement for the CCG based on the configuration information; and transmitting measurement report for the CCG to the base station in case that the measurement for the CCG is performed and a reporting condition for the measurement is satisfied.

A base station in a wireless communication system according to another embodiment of the disclosure may include a transceiver; and a controller configured to control a control message including configuration information associated with a CCG including a plurality of cells capable of performing layer 1 and layer 2 handover when a terminal moves between cells to be transmitted to the terminal through the transceiver, the configuration information including information of the plurality of cells included in the CCG, and to control measurement report for the CCG to be received from the terminal through the transceiver in case that measurement for the CCG is performed by the terminal and a reporting condition for the measurement is satisfied.

A terminal that supports MIMO in a wireless communication system according to another embodiment of the disclosure may include a transceiver; and a controller configured to control the terminal to receive a control message including configuration information associated with a CCG including a plurality of cells capable of performing layer 1 and layer 2 handover from the base station through the transceiver when moving between cells, the configuration information including information of the plurality of cells included in the CCG, to perform measurement for the CCG based on the configuration information, and to transmit measurement report for the CCG to the base station in case that the measurement for the CCG is performed and a reporting condition for the measurement is satisfied.

### Effect

According to an embodiment of the present invention, it is possible to efficiently manage mobility of a terminal using a new radio resource management (RRM) method that considers multiple input multiple output (MIMO) performance of the terminal.

### Brief Description of Drawings

FIG. 1 illustrates a measurement model for a terminal to derive quality of an arbitrary cell and a measurement model to derive and report a beam measurement value to be reported according to an embodiment of the disclosure.
FIG. 2 illustrates a relationship between a terminal, a transmission and reception point (TRP), and a cell in a multi-cell, multi-TRP environment present under one or more distributed units (DUs) according to an embodiment of the disclosure.
FIG. 3 illustrates a method in which a terminal receives configuration of coordinated cell group (CCG)-related information from a base station and performs measurement and reporting according to an embodiment of the disclosure.
FIG. 4 illustrates a measurement model for a terminal to derive quality of a certain CCG and a measurement model to derive and report a beam measurement value to be reported according to an embodiment of the disclosure.
FIG. 5illustrates a measurement model for a terminal to derive quality of a certain CCG and a measurement model to derive and report a beam measurement value to be reported according to an embodiment of the disclosure.
FIG. 6 illustrates a measurement model for a terminal to derive quality of a certain CCG and a measurement model to derive and report a beam measurement value to be reported according to an embodiment of the disclosure.
FIG. 7 illustrates a measurement model for a terminal to derive quality of a certain CCG and a measurement model to derive and report a beam measurement value to be reported according to an embodiment of the disclosure.
FIG. 8 is a diagram illustrating a structure of a base station according to an embodiment of the disclosure.
FIG. 9 is a diagram illustrating a structure of a terminal according to an embodiment of the disclosure.

### Detailed Description

Hereinafter, the operating principle of the present invention is described in detail with reference to the accompanying drawings. In describing the present invention below, detailed description of related known functions or configurations will be omitted when it is determined that the description may make the subject matter of the present invention unnecessarily unclear. The terms that are described below are terms defined in consideration of the functions in the present invention, and may be different according to a user, intent of an operator, or custom. Therefore, the terms should be defined based on the contents throughout the specification.

In the following description, terms used to identify connection nodes, terms that refer to network entities, terms that refer to messages, terms that refer to interfaces between network objects, and terms that refer to various identification information are provided for convenience of description. Therefore, the present invention is not limited to the following terms and other terms that refer to objects having equivalent technical meaning may be used.

In the following description, a base station is an entity that allocates resources to a terminal, and may be at least one of a gNode B, an eNode B, a Node B, a BS, a wireless access unit, a BS controller, and a node on a network. A terminal may include a user equipment (UE), a mobile station (MS), a cellular phone, a smartphone, a computer, or a multimedia system capable of performing communication functions. In the disclosure, a "downlink (DL)" refers to a radio transmission link through which a base station transmits a signal to a terminal, and an "uplink" refers to a radio transmission link through which a terminal transmits a signal to a base station. Also, although the following description may be directed to a long term evolution (LTE) or LTE-A system by way of an example, embodiments of the disclosure may also be applied to other communication systems having technical backgrounds or channel types similar to the embodiments of the disclosure. For example, 5G mobile communication technology (5G new radio (NR)) developed beyond LTE-A may be included in the system to which the embodiments of the disclosure may apply, and in the following description, "5G" may be a concept that covers exiting LTE, LTE-A, and other similar services. In addition, based on determinations by those skilled in the art, the disclosure may be applied to other communication systems through some modifications without significantly departing from the scope of the disclosure. Here, it will be understood that each block of flowchart illustrations and combinations of blocks in the flowchart illustrations may be implemented by computer program instructions.

These computer program instructions may be provided to a processor of a general-purpose computer, a special purpose computer, or other programmable data processing apparatus, such that the instructions, executed via the processor of the computer or other programmable data processing apparatus, create a method of performing the functions described in the flowchart block(s). Since these computer program instructions may also be stored in a computer usable or computer-readable memory that may direct a computer or other programmable data processing apparatus to implement a function in a particular manner, the instructions stored in the computer usable or computer-readable memory may produce an article of manufacture including an instruction method for implementing the function specified in the flowchart block(s). The computer program instructions may also be loaded onto a computer or other programmable data processing apparatus to cause a series of operational steps to be performed on the computer or other programmable apparatus to produce a computer implemented process such that the instructions executed on the computer or other programmable apparatus provide steps for implementing the functions specified in the flowchart block(s).

Also, each block may represent a module, a segment, or a portion of code, which includes one or more executable instructions for implementing the specified logical function(s). It should also be noted that in some alternative implementations, the functions noted in the blocks may occur out of order. For example, two blocks shown in succession may in fact be executed simultaneously or the blocks may sometimes be executed in the reverse order, depending on the functionality involved. Here, the term "unit" used herein refers to a software element or a hardware element, such as a field programmable gate array (FPGA) or an application specific integrated circuit (ASIC), which may perform a predetermined function. However, the term "unit" does not always have a meaning limited to software or hardware. "Unit" may be configured either to be stored in an addressable storage medium or to execute one or more processors. Therefore, "unit" includes, for example, elements such as software elements, object-oriented software elements, class elements, and task elements, processes, functions, properties, procedures, sub-routines, segments of a program code, drivers, firmware, micro-codes, circuits, data, database, data structures, tables, arrays, and parameters. The elements and functions provided by the "unit" may be combined into a smaller number of elements and "units", or further divided into additional elements and "units". In addition, the elements and "units" may be implemented to reproduce one or more CPUs within a device or a security multimedia card. Also, the term "unit" in the embodiments may include one or more processors.

For convenience of description below, the present invention uses terms and names defined in 5GS and NR standards that are standards defined by the 3rd Generation Partnership Project (3GPP) organization among currently existing communication standards. However, the present invention is not limited to the terms and the names and may be equally applied to wireless communication networks that comply with other standards. For example, the present invention may be applied to 3GPP 5GS/NR (5G mobile communication standards).

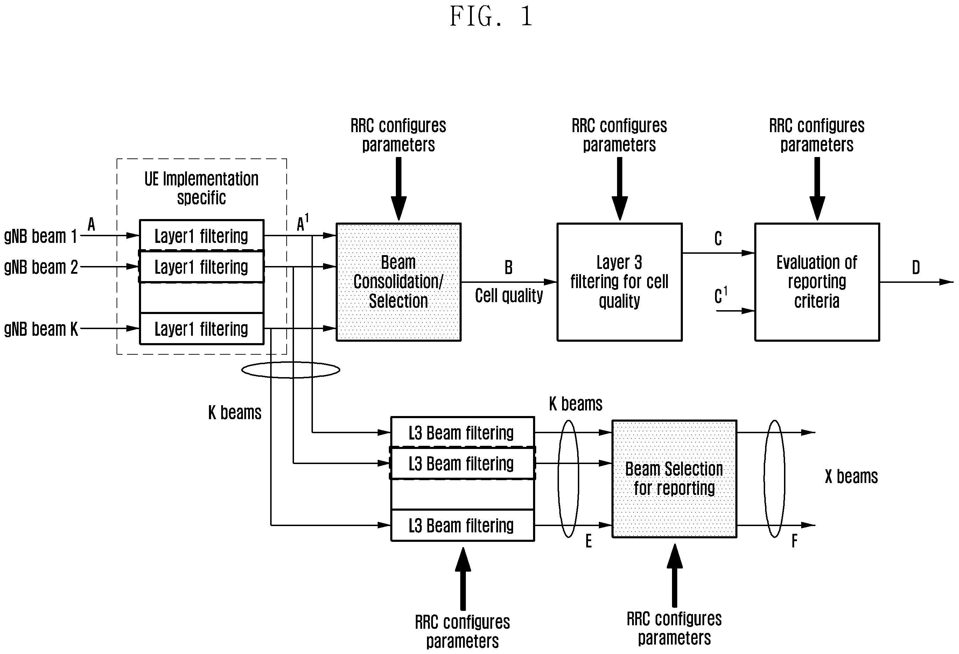

FIG. 1 illustrates a measurement model for a terminal to derive quality of an arbitrary cell and a measurement model to derive and report a beam measurement value to be reported according to an embodiment of the disclosure.

A network may configure, to a terminal, parameters for deriving measurement results, such as reference signal received power (RSRP), reference signal received quality (RSRQ), signal-to-noise ratio (SINR), and channel quality indicator (CQI) per cell, representing each cell. For example, the network may configure the maximum number of beams to be averaged, beam aggregation threshold, and reference signal type to the terminal. Also, the network may configure parameters for deriving measurement results, such as RSRP, RSRQ, SINR, and CQI per bandwidth part (BWP), representing each BWP within a cell. For example, the network may configure the maximum number of beams to be averaged, beam aggregation threshold, and reference signal type to the terminal.

With reference to FIG. 1, the terminal may receive reference signals transmitted from a specific base station (gNB), for example, a synchronization signal block (hereinafter, SSB) or a channel state information reference signal (CSI-RS), and may distinguish transmission beams of different base stations by referring to a synchronization signal block index (hereinafter, SSB ID) or a CSI-RS ID. As such, the terminal that receives a periodic synchronization signal transmitted from the base station may consecutively measure synchronization signals with the same SSB ID or CSI-RS ID, may measure quality of a base station beam indicated by a corresponding synchronization signal, and may measure quality of a cell to which the synchronization signals belong from the measured qualities of the beams.

With reference to FIG. 1, the terminal may perform layer 1 filtering with respect to each of base station beams periodically received, for example, synchronization signals, such as SSB or CSI-RS with the same ID indicating a base station beam that the terminal may identify.

Afterwards, to derive a single measurement value for determining cell quality, the terminal may derive a single cell quality measurement value by going through a beam selection and merging process for a plurality of beams. In this beam selection and merging process, the terminal may derive a single cell quality measurement value by comparing and selecting beams through methods as follows.
1. A method of selecting a beam measurement value with the best measurement value.
2. A method of selecting a beam measurement value with the best measurement value from among beam measurement values having values greater than or equal to a specific threshold configured by the base station using any downlink signal (radio resource control (RRC) signal, media access control (MAC) signal, physical layer (PHY) signal, etc.). Here, if there is no beam measurement value having a measurement value greater than or equal to the threshold, the terminal may determine that a corresponding cell is not suitable for connection.
3. A method of acquiring the average by sequentially selecting N beam measurement values with good measurement values, starting from a beam with the best measurement value.
4. A method of acquiring the average by selecting beam measurement values having values greater than or equal to a specific threshold configured by the base station using any downlink signal (RRC signal, MAC signal, PHY signal, etc.) and by sequentially selecting N beam measurement values with good measurement values, starting from a beam with the best measurement value. Here, it is a method of acquiring the average by selecting only such beams if the number of beams greater than or equal to the threshold is less than N. Here, if there is no beam greater than or equal to the threshold, the terminal may determine that a corresponding cell is not suitable for connection.

To derive the cell quality measurement value, if all of or some of necessary parameters, for example, the maximum number of beams to be averaged, a beam aggregation threshold, and a reference signal type, are not configured, the terminal may simply derive a cell value using a beam value with the best quality without performing this derivation. Otherwise, if all of or some of the necessary parameters are configured, the terminal may perform a specified operation among the above-described operations. Here, the terminal may perform a different operation depending on a configured parameter. For example, in case that only the maximum number of beams to be averaged is configured, the terminal may perform the above operation 3. Also, in case that only the beam aggregation threshold is configured, the terminal may perform the above operation 2. Also, in case that all of the maximum number of beams to be averaged and the beam aggregation threshold are configured, the terminal may perform the above operation 4. Also, in case that nothing is configured, the terminal may perform the above operation 1.

Then, the terminal performs L3 filtering for a single cell quality value. For this L3 filtering, the base station may configure a specific weight factor to the terminal using any downlink signal (RRC signal, MAC signal, PHY signal, etc.), and the terminal may perform layer 3 filtering using the configured weight factor.

Then, in case that the cell quality value satisfies specific measurement reporting criteria configured by the base station using any downlink signal (RRC signal, MAC signal, PHY signal, etc.), for example, in case that any configured event trigger condition is satisfied or in case that a configured periodic reporting period is reached, the terminal may report the measurement value to the base station.

With reference to FIG. 1, in case that reporting of individual beam values is configured to be included in the measurement report, the terminal may also perform a beam-specific measurement deriving and report value selecting process for this beam value measurement report.

To this end, the terminal may derive each beam-specific measurement value that is averaged through layer 3 filtering with respect to each of beam-specific measurement values having gone through layer 1 filtering. For this L3 filtering, the base station may configure a specific weight factor to the terminal using any downlink signal (RRC signal, MAC signal, PHY signal, etc.), and the terminal may perform layer 3 filtering using the configured weight factor.

Then, to report beam quality measurement, the terminal may perform a beam selection process according to a method and a procedure configured by the base station using any downlink signal (RRC signal, MAC signal, PHY signal, etc.). In the beam selection process, the terminal may derive beam measurement values to be reported to the base station by comparing and selecting beams through methods as follows.
1. A method of selecting a beam measurement value with the best measurement value.
2. A method of selecting a beam measurement value with the best measurement value from among beam measurement values having values greater than or equal to a specific threshold configured by the base station using any downlink signal (RRC signal, MAC signal, PHY signal, etc.). Here, if there is no beam measurement value having a measurement value greater than or equal to the threshold, the terminal may not include a measurement value for any beams in the report.
3. A method of acquiring the average by sequentially selecting N beam measurement values with good measurement values starting from a beam with the best measurement value.
4. A method of acquiring the average by selecting beam measurement values having values greater than or equal to a specific threshold configured by the base station using any downlink signal (RRC signal, MAC signal, PHY signal, etc.) and by sequentially selecting N beam measurement values with good measurement values, starting from a beam with the best measurement value. Here, it is a method of acquiring the average by selecting only such beams if the number of beams greater than or equal to the threshold is less than N. Here, if there is no beam greater than or equal to the threshold, the terminal may not include a measurement value for any beams in the report.

To derive the beam measurement value, if all of or some of necessary parameters, for example, the maximum number of beams N, a beam aggregation threshold, and a reference signal type, are not configured, the terminal may simply report a beam value with the best quality without performing this derivation. Otherwise, if all of or some of the necessary parameters are configured, the terminal may perform a specified operation among the above-described operations. Here, the terminal may perform a different operation depending on a configured parameter. For example, in case that only the maximum number of beams is configured, the terminal may perform the above operation 3. Also, in case that only the beam aggregation threshold is configured, the terminal may perform the above operation 2. Also, in case that all of the maximum number of beams and the beam aggregation threshold are configured, the terminal may perform the above operation 4. Also, in case that nothing is configured, the terminal may perform the above operation 1.

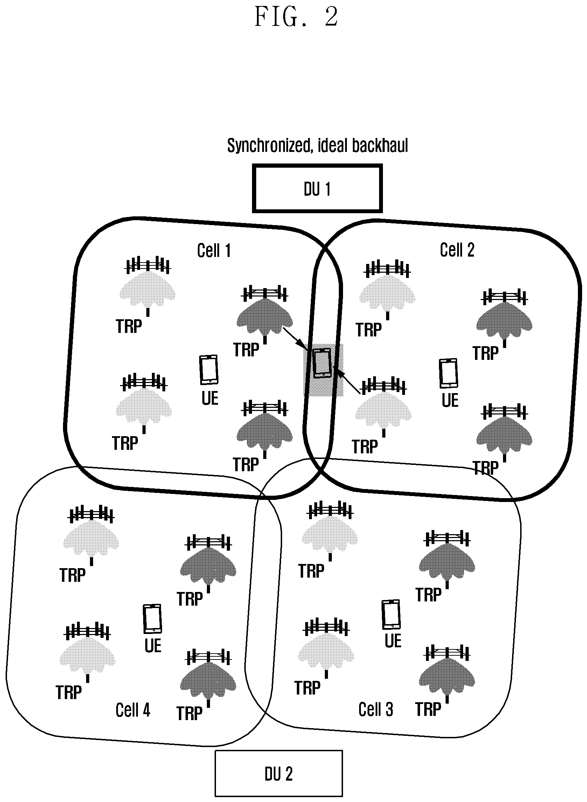

FIG. 2 illustrates 5G and post-B5G environments capable of using analog beamforming in which one or more cells and one or more transmission and reception points (TRPs) within each cell may utilize multiple antennas to operate one or more beam directions. Cell 1 and Cell 2 displayed in FIG. 2 are dependent on distributed unit (DU) 1, and Cell 3 and Cell 4 are dependent on DU 2. Cells dependent on a single DU may be said to have an ideal backhaul that supports high performance with a delay error of approximately 2.5 msec or less. Also, it can be viewed as an environment in which downlink signals between cells under a single DU and between TRPs belonging to the cell are synchronized. In this environment, in case of a terminal capable of using MIMO that allows simultaneous signal transmission and reception with one or more terrestrial network TRPs using multiple antennas, the terminal may perform transmission and reception by simultaneously using multiple TRPs within a single cell. Also, in case of being supported by the network, the terminal may simultaneously transmit and receive uplink signals from different TRPs within different cells belonging to Cell 1 and Cell 2 as shown in FIG. 2.

In the case of the terminal having MIMO capability to simultaneously transmit and receive data from one or more cells, when cells with synchronized and ideal backhaul, for example, dependent on a single DU are consecutively present, the terminal may maintain its performance even in a cell boundary area, which is a typical performance degradation area, present between such cells. The terminal may not observe such performance degradation by receiving data from a TRP of another cell.

Also, in case of this terminal, when base stations support fast handover based on beam measurement signal feedback at layer 1 (physical layer (PHY))/layer 2 (medium access control layer (MAC)), and when cells with synchronized and ideal backhaul, for example, dependent on a single DU are consecutively present, very fast handover may also be performed by simply transmitting the beam measurement signal feedback between such cells.

When cells with synchronized and ideal backhaul, for example, dependent on a single DU are grouped into a single group and referred to as a coordinated cell group (CCG), in case of terminals that support a MIMO function within the CCG, a trigger point in time of a measurement report transmission operation through cell representative value derivation through cell-based RRM measurement as shown in FIG. 1 and comparison of cell representative values may be slow and unnecessary between cells within the CCG due to L3 (RRC) filtering, compared to L1/L2-based operation. Also, a method of deriving and comparing a representative value of each cell based on beams belonging to each cell may not represent the performance of a terminal that is present between two cells (e.g., boundary between two cells) and may simultaneously receive services from the two cells.

Herein, proposed is a CCG-based RRM measurement to solve the above problems.

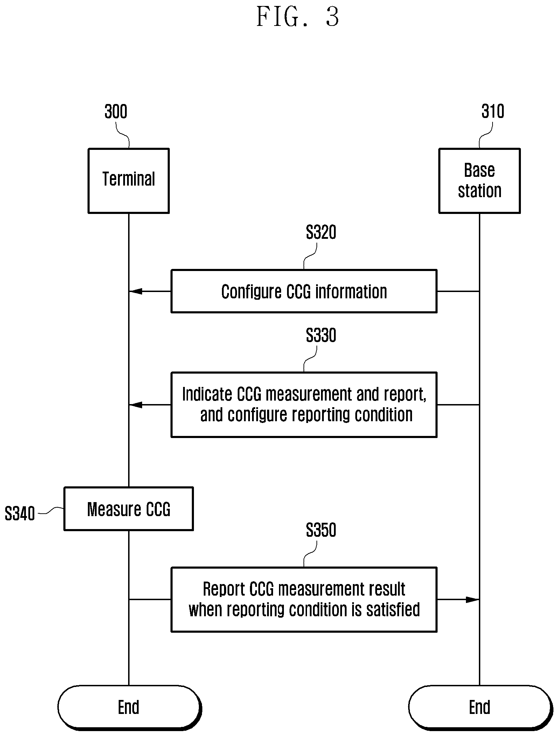

With reference to FIG. 3, a base station 310 may provide CCG information for measurement to a terminal 300 (S320). A single CCG may include one or more cells and information of the cells that belong to a single CCG may be provided to the terminal in the form of a cell ID list. A method of selecting cells that constitute a single CCG may be, for example, cells that satisfy a certain condition configured by the base station. The cells may be, for example, cells that may use L1/L2 handover when the terminal moves between adjacent cells. The cells that constitute a single CCG may be, for example, cells that may simultaneously receive services from adjacent cells even when the terminal is present in the boundary between the adjacent cells and may be, for example, cells that may support synchronized and ideal backhaul.

The CCG information may be provided in the form of a list of cell IDs that constitute a single CCG and a list of one or more CCGs that include CCG ID information.

The CCG information may be provided to the terminal 300 in the form of an RRC message, a MAC CE message, or any downlink signal.

Also, the base station 310 may provide criteria of measurement report using measured CCG information and parameters for the measurement report to the terminal 300 and may indicate the measurement report to the terminal 300 (S330).

The terminal 300 may periodically measure the CCG (S340). In case that the condition is satisfied, the terminal 300 may transmit the measurement report to the base station 310 (S350).

The terminal 300 may receive the following measurement reporting criteria and parameters from the base station in the form of an RRC message, a MAC message, or any other downlink signals:
A. in case that a measurement value of a serving CCG is greater than threshold_A;
B. in case that a measurement value of a serving CCG is less than threshold_B;
C. in case that a measurement value of (one or more) specific CCGs configured by the base station is greater than threshold_C;
D. in case that a measurement value of (one or more) specific CCGs configured by the base station is less than threshold_D;
E. in case that a measurement value of an adjacent CCG is better than a measurement value of a serving CCG (or SpCCG) by offset_E or more;
F. in case that a measurement value of an adjacent CCG is non better than a measurement value of a serving CCG (or SpCCG) by offset_F or less;
G. in case that a measurement value of an adjacent CCG is greater than threshold_G;
H. in case that a measurement value of an adjacent CCG is less than threshold_H;
I. in case that a measurement value of a serving CCG (or SpCCG) is less than threshold_I_1 and is greater than threshold_I_2 of an adjacent CCG;
J. in case that a measurement value of a serving CCG (or SpCCG) is greater than threshold_J_1 and less than threshold_J_2 of an adjacent CCG;
K. in case that a measurement value of an adjacent CCG is greater than a measurement value of a secondary CCG by offset_K or more; and
L. in case that a measurement value of an adjacent CCG is less than a measurement value of a secondary CCG by offset_L or less.

The any threshold may be a threshold configured by the base station with a single value, or may be a value that is determined through an operation (addition/subtraction, etc.) of any threshold configured by the base station and any offset configured by the base station.

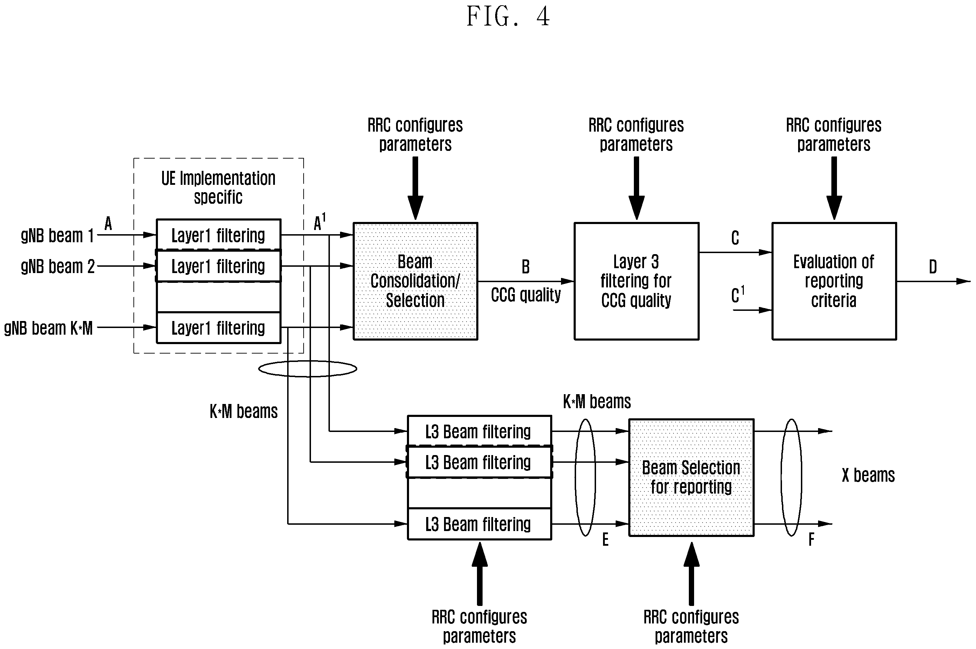

Meanwhile, with reference to FIG. 4, the terminal may perform layer 1 filtering for each of base station beams that the terminal periodically receives, for example, synchronization signals such as SSB or CSI-RS included in M cells included in a single CCG that the terminal may distinguish.

Here, information on M cells included in a single CCG, for example, information of cell IDs such as a physical cell id (PCI) may be included in CCG information configured by the base station to the terminal or a CCG measurement and report indication (measurement configuration (measConfig)) message transmitted from the base station to the terminal, described above with reference to FIG. 3.

Here, information of up to K downlink reference signals transmitted from a single cell, for example, beam information such as a list of SSB or CSI-RS IDs may be included in CCG information configured by the base station to the terminal or a CCG measurement and report indication (measurement configuration (measConfig)) message transmitted from the base station to the terminal, described above with reference to FIG. 3.

Then, to derive a single measurement value for determining CCG quality, the terminal may derive a single CCG quality measurement value by going through a beam selection and merging process for a plurality of beams. In this beam selection and merging process, the terminal may derive a single CCG quality measurement value by comparing and selecting beams through methods as follows.
1. A method of selecting a beam measurement value with the best measurement value.
2. A method of selecting a beam measurement value with the best measurement value from among beam measurement values having values greater than or equal to a specific threshold configured by the base station using any downlink signal (RRC signal, MAC signal, PHY signal, etc.). Here, if there is no beam measurement value having a measurement value greater than or equal to the threshold, the terminal may determine that it is not suitable for connection.
3. A method of acquiring the average by sequentially selecting N beam measurement values with good measurement values, starting from a beam with the best measurement value.
4. A method of acquiring the average by selecting beam measurement values having values greater than or equal to a specific threshold configured by the base station using any downlink signal (RRC signal, MAC signal, PHY signal, etc.) and an N value and by sequentially selecting N beam measurement values with good measurement values, starting from a beam with the best measurement value. Here, it is a method of acquiring the average by selecting only such beams if the number of beams greater than or equal to the threshold is less than N. Here, if there is no beam greater than or equal to the threshold, the terminal may determine that it is not suitable for connection.
5. A method of acquiring the average by distinguishing beams transmitted from different TRPs and by sequentially selecting N beam measurement values with good measurement values, starting from a beam with the best measurement value in each TRP.
6. A method of acquiring the average by selecting beam measurement values having values greater than or equal to a specific threshold configured by the base station using any downlink signal (RRC signal, MAC signal, PHY signal, etc.) and an N value, by distinguishing beams transmitted from different TRPs among them, and by sequentially selecting N beam measurement values with good measurement values, starting from a beam with the best measurement value in each TRP. Here, it is a method of acquiring the average by selecting only such beams if the number of beams greater than or equal to the threshold is less than N. Here, in case of a TRP with no beam greater than or equal to the threshold, the terminal may acquire the average excluding the TRP. Here, if there is no beam greater than or equal to the threshold, the terminal may determine that it is not suitable for corresponding CCG connection.
7. A method of distinguishing beams transmitted from different TRPs and selecting only beams with the best measurement value from each TRP one by one, and then sequentially selecting and adding beam measurement values with good measurement values from the best beam among the selected beams.
8. A method of selecting beam measurement values having values greater than or equal to a specific threshold configured by the base station using any downlink signal (RRC signal, MAC signal, PHY signal, etc.) and an N value, distinguishing beams transmitted from different TRPs among them, selecting only beams with the best measurement value from each TRP one by one and then sequentially selecting and adding N beam measurement values with good measurement values from the best beam among the selected beams. Here, it is a method of selecting and adding only such beams if the number of beams greater than or equal to the threshold is less than N. Here, in case of a TRP with no beam greater than or equal to the threshold, the terminal may acquire the average excluding the TRP. Here, if there is no beam greater than or equal to the threshold, the terminal may determine that it is not suitable for corresponding CCG connection.
9. A method of distinguishing beams transmitted from different TRPs and sequentially selecting and adding N beam measurement values with good measurement values, starting from a beam with the best measurement value in each TRP.
10. A method of selecting beam measurement values having values greater than or equal to a specific threshold configured by the base station using any downlink signal (RRC signal, MAC signal, PHY signal, etc.) and an N value, distinguishing beams transmitted from different TRPs among them, and sequentially selecting and adding N beam measurement values with good measurement values, starting from a beam with the best measurement value in each TRP. Here, it is a method of selecting and adding only such beams if the number of beams greater than or equal to the threshold is less than N. Here, in case of a TRP with no beam greater than or equal to the threshold, the terminal may acquire the average excluding the TRP. Here, if there is no beam greater than or equal to the threshold, the terminal may determine that it is not suitable for corresponding CCG connection.
11. A method of distinguishing beams transmitted from TRPs, sequentially selecting N beams with good measurement values from beams with the best measurement value in each TRP (beams corresponding to maximum N x number of TRPs) and then adding the same.
12. A method of selecting beam measurement values having values greater than or equal to a specific threshold configured by the base station using any downlink signal (RRC signal, MAC signal, PHY signal, etc.) and an N value, distinguishing beams transmitted from different TRPs among them, and sequentially selecting and then adding N beams with good measurement values from beams with the best measurement value in each TRP. Here, it is a method of selecting and adding only such beams if the number of beams greater than or equal to the threshold is less than N. Here, in case of a TRP with no beam greater than or equal to the threshold, the terminal may acquire the average excluding the TRP. Here, if there is no beam greater than or equal to the threshold, the terminal may determine that it is not suitable for corresponding CCG connection.
13. Separately measures beams transmitted from different TRPs of different cells belonging to a single CCG and then measures a measurement value of a TRP as follows:
   A. A method of acquiring the average by selecting beam measurement values having values greater than or equal to threshold_beam for each TRP and by sequentially selecting N beam measurement values with good measurement values starting from a beam with the best measurement value among them;
   B. A method of selecting beam measurement values having values greater than or equal to threshold_beam for each TRP and sequentially selecting and adding N beam measurement values with good measurement values starting from a beam with the best measurement value among them; and
   C. A method of selecting beam measurement values having values greater than or equal to threshold_beam for each TRP and sequentially selecting and multiplying N beam measurement values with good measurement values starting from a beam with the best measurement value among them.
   Then, compares different TRPs of different cells belonging to a single CCG using the measurement values of the TRPs and acquires a measurement value of the CCG as follows:
   A. A method of acquiring the average by selecting TRP measurement values having values greater than or equal to threshold_TRP from a TRP with the highest measurement value and by sequentially selecting M TRP measurement values with good measurement values starting from a TRP with the best measurement value among them;
   B. A method of selecting TRP measurement values having values greater than or equal to threshold _TRP from a TRP with the highest measurement value and sequentially selecting and adding M TRP measurement values with good measurement values starting from a TRP with the best measurement value among them; and
   C. A method of selecting TRP measurement values having values greater than or equal to threshold _TRP from a TRP with the highest measurement value and sequentially selecting and multiplying M TRP measurement values with good measurement values starting from a TRP with the best measurement value among them.
14. Separately measures beams transmitted from different TRPs of different cells belonging to a single CCG and then measures a measurement value of a TRP as follows:
   A. A method of acquiring the average by selecting beam measurement values having values greater than or equal to threshold_beam for each TRP and by sequentially selecting N beam measurement values with good measurement values starting from a beam with the best measurement value among them;
   B. A method of selecting beam measurement values having values greater than or equal to threshold_beam for each TRP and sequentially selecting and adding N beam measurement values with good measurement values starting from a beam with the best measurement value among them; and
   C. A method of selecting beam measurement values having values greater than or equal to threshold_beam for each TRP and sequentially selecting and multiplying N beam measurement values with good measurement values starting from a beam with the best measurement value among them.
   Then, compares different cells belonging to a single CCG using the measurement values of the TRPs and acquires a measurement value of each cell as follows:
   D. A method of acquiring the average of selecting TRP measurement values having values greater than or equal to threshold _TRP from a TRP with the highest measurement value and by sequentially selecting M TRP measurement values with good measurement values starting from a TRP with the best measurement value among them;
   E. A method of selecting TRP measurement values having values greater than or equal to threshold _TRP from a TRP with the highest measurement value and sequentially selecting and adding M TRP measurement values with good measurement values starting from a TRP with the best measurement value among them; and
   F. A method of selecting TRP measurement values having values greater than or equal to threshold _TRP from a TRP with the highest measurement value and sequentially selecting and multiplying M TRP measurement values with good measurement values starting from a TRP with the best measurement value among them.
   And compares different cells belonging to a single CCG using the measurement values of the cells and acquires a measurement value of the CCG as follows:
   A. A method of acquiring the average by selecting cell measurement values having values greater than or equal to threshold_cell from a cell with the highest measurement value and by sequentially selecting L cell measurement values with good measurement values starting from a cell with the best measurement value among them;
   B. A method of selecting cell measurement values having values greater than or equal to threshold_cell from a cell with the highest measurement value and sequentially selecting and adding L cell measurement values with good measurement values starting from a cell with the best measurement value among them;
   C. A method of selecting cell measurement values having values greater than or equal to threshold_cell from a cell with the highest measurement value and sequentially selecting and multiplying L cell measurement values with good measurement values starting from a cell with the best measurement value among them.

Here, in case of a TRP with no beam greater than or equal to the threshold, the terminal may perform an operation excluding the TRP. Here, in case of a cell without even a single TRP greater than or equal to the threshold, the terminal may perform an operation excluding the cell. Here, if there is no beam greater than or equal to the threshold, the terminal may determine that it is not suitable for corresponding CCG connection.

To derive the CCG quality measurement value, if all of or some of necessary parameters, for example, the maximum number of beams to be averaged, a beam aggregation threshold, and a reference signal type, are not configured, the terminal may simply derive a CCG value using a beam value with the best quality from each TRP without performing this derivation. Otherwise, if all of or some of the necessary parameters are configured, the terminal may perform a specified operation among the above-described operations. Here, the terminal may perform a different operation depending on a configured parameter. For example, in case that only the maximum number of beams to be averaged is configured, the terminal may perform the above operation 3. Also, in case that only the beam aggregation threshold is configured, the terminal may perform the above operation 2. Also, in case that all of the maximum number of beams to be averaged and the beam aggregation threshold are configured, the terminal may perform the above operation 4. Also, in case that nothing is configured, the terminal may perform the above operation 1.

Then, the terminal performs L3 filtering for a single CCG quality value. For this L3 filtering, the base station may configure a specific weight factor to the terminal using any downlink signal (RRC signal, MAC signal, PHY signal, etc.), and the terminal may perform layer 3 filtering using the configured weight factor.

Then, in case that the CCG quality value satisfies specific measurement reporting criteria configured by the base station using any downlink signal (RRC signal, MAC signal, PHY signal, etc.), for example, in case that any configured event trigger condition is satisfied or in case that a configured periodic reporting period is reached, the terminal may report the measurement value to the base station.

Also, of course, the terminal may select and report X beams from among up to K*M beams for beam measurement reporting configured by the base station.

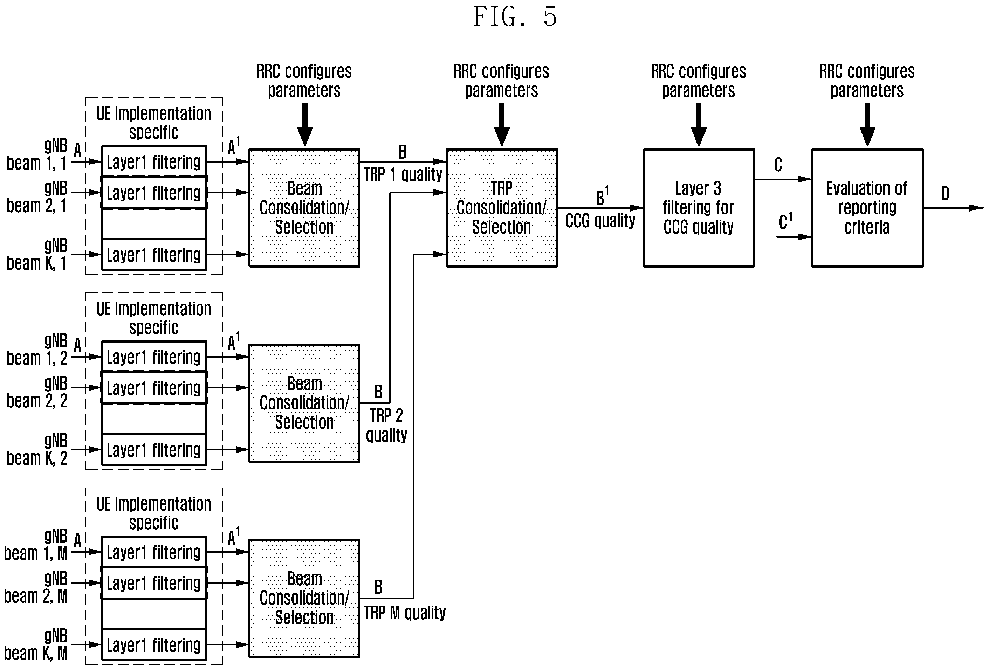

With reference to FIG. 5, the terminal may perform layer 1 filtering for each of base station beams that the terminal periodically receives, for example, synchronization signals such as up to M*K SSBs or CSI-RSs included in M TRPs included in a single CCG that the terminal may distinguish.

Here, information on M TRPs included in a single CCG, for example, information of a corset pool index or TRP IDs configured by the base station may be included in CCG information configured by the base station to the terminal or a CCG measurement and report indication (measurement configuration (measConfig)) message transmitted from the base station to the terminal, described above with reference to FIG. 3.

Here, information of up to K downlink reference signals transmitted from a single TRP, for example, beam information such as a list of SSB or CSI-RS IDs may be included in CCG information configured by the base station to the terminal or a CCG measurement and report indication (measurement configuration (measConfig)) message transmitted from the base station to the terminal, described above with reference to FIG. 3.

Then, to derive a single measurement value for determining CCG quality, the terminal may derive a single CCG quality measurement value by going through a beam selection and merging process for a plurality of beams. In this beam selection and merging process, the terminal may derive a single CCG quality measurement value by comparing and selecting beams through methods as follows.
1. A method of distinguishing beams transmitted from different TRPs and selecting only beams with the best measurement value from each TRP one by one to determine a TRP measurement value and then sequentially selecting and adding N TRP measurement values with good measurement values from the best TRP among the selected TRPs.
2. A method of selecting beam measurement values having values greater than or equal to a specific threshold configured by the base station using any downlink signal (RRC signal, MAC signal, PHY signal, etc.) and an N value, distinguishing beams transmitted from different TRPs among them, selecting only beams with the best measurement value from each TRP one by one to determine a TRP measurement value and then sequentially selecting and adding N TRP measurement values with good measurement values from the best TRP among the selected TRP. Here, it is a method of selecting and adding only such beams if the number of beams greater than or equal to the threshold is less than N. Here, in case of a TRP with no beam greater than or equal to the threshold, the terminal may acquire the average excluding the TRP. Here, if there is no beam greater than or equal to the threshold, the terminal may determine that it is not suitable for corresponding CCG connection.
3. Separately measures beams transmitted from different TRPs belonging to a single CCG and then acquires a measurement value of a TRP as follows:
   A. A method of acquiring the average by selecting beam measurement values having values greater than or equal to threshold_beam for each TRP and by sequentially selecting N beam measurement values with good measurement values starting from a beam with the best measurement value among them;
   B. A method of selecting beam measurement values having values greater than or equal to threshold_beam for each TRP and sequentially selecting and adding N beam measurement values with good measurement values starting from a beam with the best measurement value among them; and
   C. A method of selecting beam measurement values having values greater than or equal to threshold_beam for each TRP and sequentially selecting and multiplying N beam measurement values with good measurement values starting from a beam with the best measurement value among them.
4. Compares different TRPs of different cells belonging to a single CCG using the measurement values of the TRPs and acquires a measurement value of the CCG as follows:
   G. A method of acquiring the average by selecting TRP measurement values having values greater than or equal to threshold _TRP from a TRP with the highest measurement value and by sequentially selecting M TRP measurement values with good measurement values starting from a TRP with the best measurement value among them;
   H. A method of selecting TRP measurement values having values greater than or equal to threshold _TRP from a TRP with the highest measurement value and sequentially selecting and adding M TRP measurement values with good measurement values starting from a TRP with the best measurement value among them; and
   I. A method of selecting TRP measurement values having values greater than or equal to threshold _TRP from a TRP with the highest measurement value and sequentially selecting and multiplying M TRP measurement values with good measurement values starting from a TRP with the best measurement value among them.

Here, in case of a TRP with no beam greater than or equal to the threshold, the terminal may perform an operation excluding the TRP. Here, in case of a cell without even a single TRP greater than or equal to the threshold, the terminal may perform an operation excluding the cell. Here, if there is no beam greater than or equal to the threshold, the terminal may determine that it is not suitable for corresponding CCG connection.

To derive the CCG quality measurement value, if all of or some of necessary parameters, for example, the maximum number of beams to be averaged, a beam aggregation threshold, and a reference signal type, are not configured, the terminal may simply derive a CCG value using a beam value with the best quality from each TRP without performing this derivation. Otherwise, if all of or some of the necessary parameters are configured, the terminal may perform a specified operation among the above-described operations. Here, the terminal may perform a different operation depending on a configured parameter. For example, in case that only the maximum number of beams to be averaged is configured, the terminal may perform the above operation 3. Also, in case that only the beam aggregation threshold is configured, the terminal may perform the above operation 2. Also, in case that all of the maximum number of beams to be averaged and the beam aggregation threshold are configured, the terminal may perform the above operation 4. Also, in case that nothing is configured, the terminal may perform the above operation 1.

Then, the terminal performs L3 filtering for a single CCG quality value. For this L3 filtering, the base station may configure a specific weight factor to the terminal using any downlink signal (RRC signal, MAC signal, PHY signal, etc.). The terminal may perform layer 3 filtering using the configured weight factor.

Then, in case that the CCG quality value satisfies specific measurement reporting criteria configured by the base station using any downlink signal (RRC signal, MAC signal, PHY signal, etc.), for example, in case that any configured event trigger condition is satisfied or in case that a configured periodic reporting period is reached, the terminal may report the measurement value to the base station.

Also, of course, the terminal may select and report X beams from among up to K*M beams for beam measurement reporting configured by the base station.

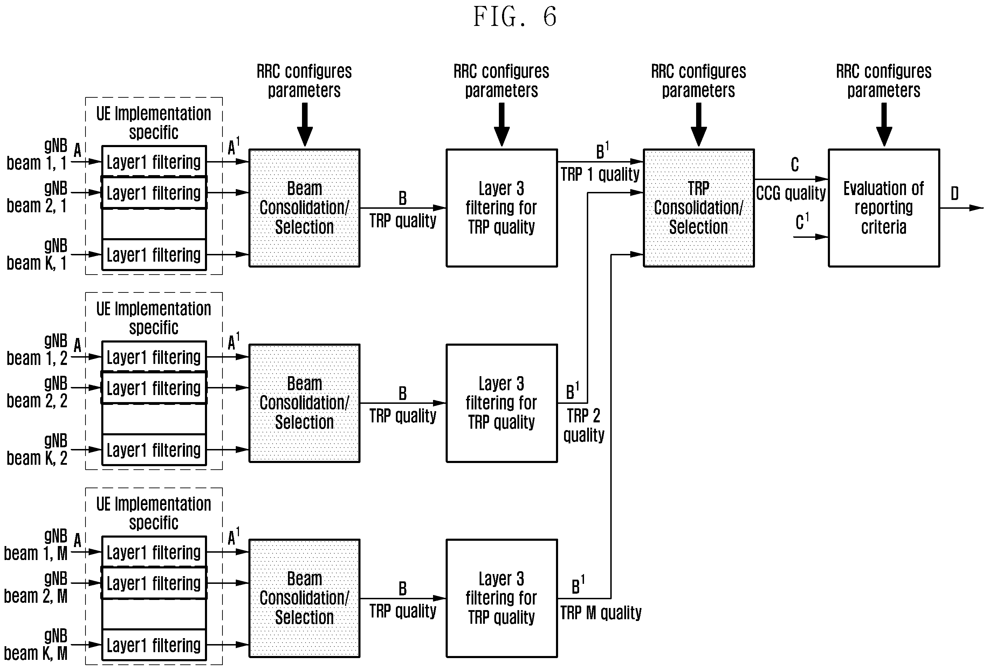

FIG. 6 illustrates an embodiment of performing layer 3 filtering for each TRP measurement value and deriving a CCG measurement value using each TRP measurement value having gone through layer 3 filtering, in the embodiment described with reference to FIG. 5 according to one disclosure of the present invention.

With reference to FIG. 6, the terminal may generate a TRP measurement value by deriving a representative value of each TRP using layer 1 filtered beam measurement values of each TRP. The terminal may perform layer 3 filtering for each of the TRP measurement values and may generate the filtered TRP measurement value. The terminal derives the CCG measurement value using the TRP measurement values.

The method described above with reference to FIG. 5 may be used for a method of generating the TRP measurement value and a method of deriving the CCG measurement value using the TRP measurement values.

Then, in case that the derived CCG measurement value satisfies specific measurement reporting criteria configured by the base station using any downlink signal (RRC signal, MAC signal, PHY signal, etc.), for example, in case that any configured event trigger condition is satisfied or in case that a configured periodic reporting period is reached, the terminal may report the measurement value to the base station.

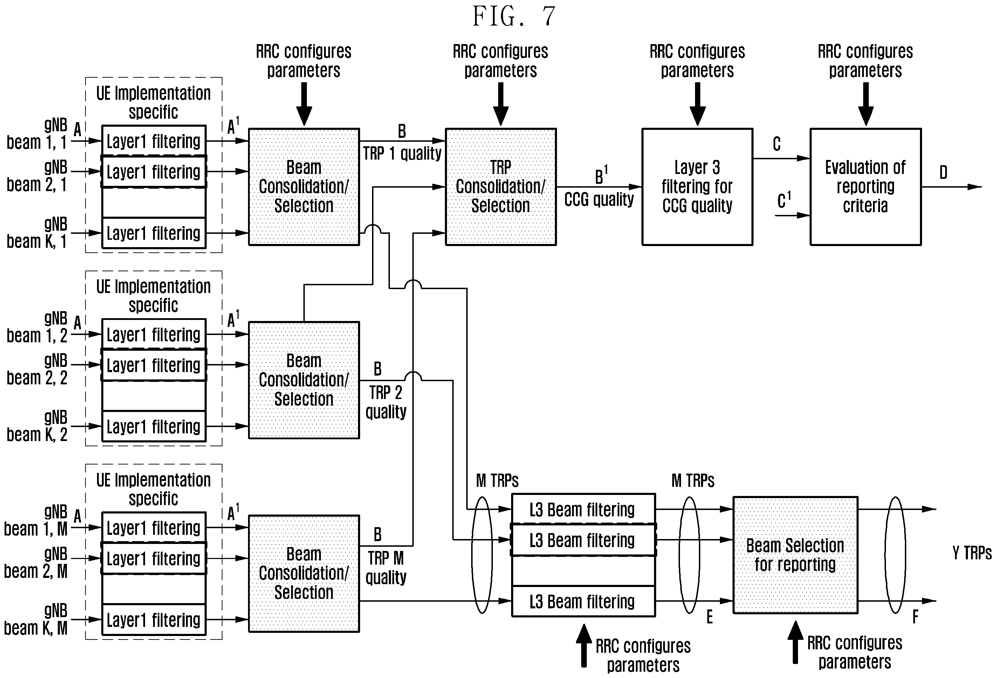

FIG. 7 illustrates an embodiment of adding a selection operation to an operation of the embodiment of FIG. 5 in order to perform layer 3 filtering for each TRP measurement value in FIG. 5 and to report some of them to the base station according to one disclosure of the present invention.

With reference to FIG. 7, the terminal may generate a TRP measurement value by deriving a representative value of each TRP using layer 1 filtered beam measurement values of each TRP. The terminal may perform layer 3 filtering for the TRP measurement values and may generate the filtered TRP measurement value. The terminal may select some of the TRP measurement values according to criteria selected by the base station. Then, in case that reporting criteria configured by the base station is satisfied, the terminal reports the same to the base station.

As described above, while performing the operation of selecting some of the TRP measurement values according to the criteria selected by the base station and reporting the same to the base station, the terminal may perform 13 filtering for the CCG quality value and may report the measurement value to the base station as described above with reference to FIG. 5.

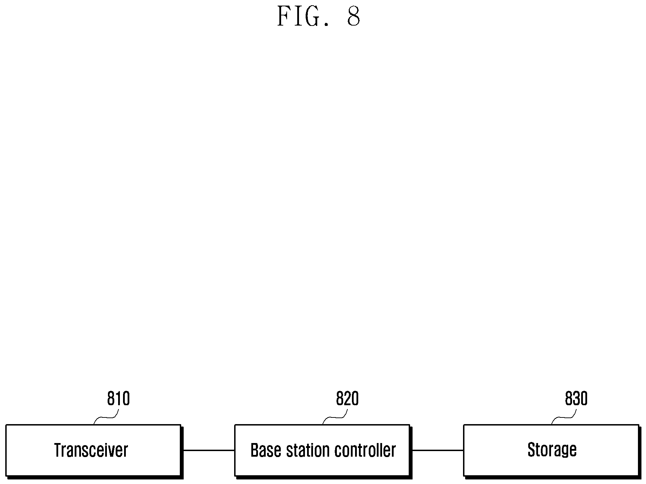

Meanwhile, FIG. 8 is a diagram illustrating a structure of a base station according to an embodiment of the disclosure.

With reference to FIG. 8, the base station may include a transceiver 810, a base station controller 820, and a storage 830. The transceiver 810, the base station controller 820, and the storage 830 may operate according to the above-described communication method of the base station. Also, a network device may correspond to the structure of the base station. However, elements of the base station are not limited to the above-described example. For example, the base station may include more or fewer elements than the above-described elements. For example, the base station may include the transceiver 810 and the base station controller 820. In addition, the transceiver 810, the base station controller 820, and the storage 830 may be implemented in the form of a single chip.

The transceiver 810 is a general term for a receiver of the base station and a transmitter of the base station, and may transmit and receive signals to and from a terminal, another base station, or other network devices. Here, a signal transmitted or received may include control information and data. The transceiver 810 may transmit system information to the terminal and may transmit a synchronization signal or a reference signal. To this end, the transceiver 810 may include a radio frequency (RF) transmitter configured to up-convert and amplify a frequency of a transmitted signal and an RF receiver configured to low-noise amplify a received signal and down-convert a frequency. However, this is only an example of the transceiver 810, and elements of the transceiver 810 are not limited to the RF transmitter and the RF receiver. The transceiver 810 may include a wired/wireless transceiver and may include various elements to transmit and receive signals. Also, the transceiver 810 may receive a signal through a communication channel (e.g., wireless channel) and output the signal to the base station controller 820, and may transmit a signal output from the base station controller 820 through the communication channel. Also, the transceiver 810 may receive a communication signal and output the same to a processor and may transmit a signal output from the processor to the terminal, another base station, or another entity through a wired/wireless network.

The storage 830 may store a program and data required for an operation of the base station. Also, the storage 830 may store control information or data included in a signal acquired from the base station. The storage 830 may be configured by storage medium, such as a read only memory (ROM), a random access memory (RAM), a hard disc, a compact disc (CD)-ROM, and a digital versatile disc (DVD), or a combination of storage mediums. Also, the storage 830 may store at least one of information transmitted and received through the transceiver 810 and information generated through the base station controller 820.

In the disclosure, the base station controller 820 may be defined as a circuit or application-specific integrated circuit or at least one processor. The processor may include a communication processor (CP) that performs control for communication and an application processor (AP) that controls a higher layer such as an application program. The base station controller 820 may control the overall operation of the base station according to an embodiment proposed in the present invention. For example, the base station controller 820 may control signal flow between the respective blocks to perform an operation according to the flowchart described above.

According to an embodiment, the base station controller 820 may control a control message including configuration information associated with a CCG including a plurality of cells capable of performing layer 1 and layer 2 handover when the terminal moves between cells to be transmitted to the terminal. The configuration information may include information of the plurality of cells included in the CCG.

In case that measurement for the CCG is performed by the terminal and a reporting condition for the measurement is satisfied, the base station controller 820 may control the measurement report for the CCG to be received from the terminal.

The CCG may include a plurality of cells that supports synchronized and ideal backhaul for the terminal or may include a plurality of cells corresponding to an arbitrary DU.

According to still another embodiment, the base station controller 820 may control at least one of measurement reporting criteria information on the CCG and parameter information for the measurement report to be transmitted to the terminal. Whether the reporting condition for the measurement is satisfied may be determined based on at least one of the measurement reporting criteria information and the parameter information for the measurement report.

Also, if layer 1 filtering is performed based on signals transmitted from the plurality of cells included in the CCG and a single CCG quality measurement value is determined based on parameter information configured to the terminal for the measurement report for the layer 1 filtering result, measurement for the CCG may be performed by the terminal by performing layer 3 filtering based on the single CCG quality measurement value.

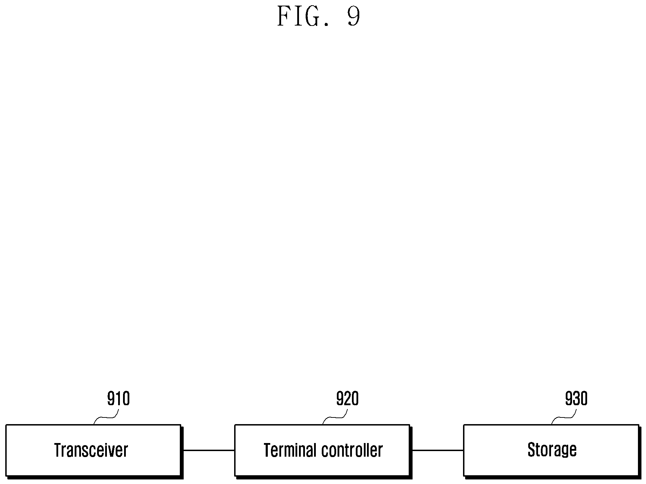

FIG. 9 is a diagram illustrating a structure of a terminal according to an embodiment of the present invention.

With reference to FIG. 9, the terminal may include a transceiver 910, a terminal controller 920, and a storage 930. The transceiver 910, the terminal controller 920, and the storage 930 may operate according to the above-described communication method of the terminal. However, elements of the terminal are not limited to the above example. For example, the terminal may include more or fewer elements than the above-described elements. For example, the terminal may include the transceiver 910 and the terminal controller 920. In addition, the transceiver 910, the terminal controller 920, and the storage 930 may be implemented in the form of a single chip.

The transceiver 910 is a general term for a receiver of the terminal and a transmitter of the terminal, and may transmit and receive signals to and from a base station, another terminal, or a network entity. A signal transmitted to or received from the base station may include control information and data. The transceiver 910 may receive, for example, system information from the base station and may receive a synchronization signal or a reference signal. To this end, the transceiver 910 may include an RF transmitter configured to up-convert and amplify a frequency of a transmitted signal and an RF receiver configured to low-noise amplify a received signal and down-convert a frequency. However, this is only an example of the transceiver 910, and elements of the transceiver 910 are not limited to the RF transmitter and the RF receiver. Also, the transceiver 910 may include a wired/wireless transceiver and may include various elements to transmit and receive signals. Also, the transceiver 910 may receive a signal through a wireless channel and output the signal to the terminal controller 920 and may transmit a signal output from the terminal controller 920 through the wireless channel. Also, the transceiver 910 may receive a communication signal and output the same to a processor and may transmit a signal output from the processor to a network entity through a wired/wireless network.

The storage 930 may store a program and data required for an operation of the terminal. Also, the storage 930 may store control information or data included in a signal acquired from the terminal. The storage 930 may be configured by storage medium such as a ROM, a RAM, a hard disc, a CD-ROM, and a DVD or a combination of storage mediums.

In the present invention, the terminal controller 920 may be defined as a circuit or application-specific integrated circuit or at least one processor. The processor may include a communication processor (CP) that performs control for communication and an application processor (AP) that controls a higher layer such as an application program. The terminal controller 920 may control the overall operation of the terminal according to an embodiment proposed in the disclosure. For example, the terminal controller 920 may control signal flow between the respective blocks to perform an operation according to the flowchart described above.

According to an embodiment, the terminal controller 920 may control a control message including configuration information associated with a CCG including a plurality of cells capable of performing layer 1 and layer 2 handover when the terminal moves between cells to be received from the base station through the transceiver. The configuration information may include information of the plurality of cells included in the CCG.

The terminal controller 920 may perform measurement for the CCG based on the configuration information and in case that the measurement for the CCG is performed and a reporting condition for the measurement is satisfied, may control the measurement report for the CCG to be transmitted to the base station.

The CCG may include a plurality of cells that supports synchronized and ideal backhaul for the terminal or may include a plurality of cells corresponding to an arbitrary DU.

According to still another embodiment, the terminal controller 920 may control at least one of measurement reporting criteria information on the CCG and parameter information for the measurement report to be received from the base station. Whether the reporting condition for the measurement is satisfied may be determined based on at least one of the measurement reporting criteria information and the parameter information for the measurement report.

According to still another embodiment, the terminal controller 920 may control the terminal to perform layer 1 filtering based on signals transmitted from the plurality of cells included in the CCG, to determine a single CCG quality measurement value based on parameter information configured to the terminal for the measurement report for the layer 1 filtering result, and to perform layer 3 filtering based on the single CCG quality measurement value.

The methods according to embodiments described in the claims or the specification of the present invention may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within an electronic device. The at least one program may include instructions that cause the electronic device to perform the methods according to embodiments as defined by the claims or specification of the present invention.

The program (software modules, software) may be stored in non-volatile memories including a RAM and a flash memory, a ROM, an electrically erasable programmable read only memory (EEPROM), a magnetic disc storage device, a CD-ROM, DVDs, other type optical storage devices, or a magnetic cassette. Alternatively, the program may be stored in a memory configured with any combination of some or all of the memory devices. Also, a plurality of such configuration memories may be included.

Also, the program may be stored in an attachable storage device accessible through communication networks, such as the Internet, Intranet, a local area network (LAN), a wide LAN (WLAN), and a storage area network (SAN), or a combination thereof. Such a storage device may access a device that performs the embodiments of the present invention via an external port. Also, a separate storage device on the communication network may access the device that performs the embodiments of the present invention.

In the above-described detailed embodiments of the present invention, an element included in the invention is expressed in the singular form or the plural form according to presented detailed embodiments. However, the singular form or the plural form is selected appropriately to the presented situation for convenience of description, and the present invention is not limited by elements expressed in the singular form or the plural form. Therefore, an element expressed in the plural form may also include a single element or an element expressed in the singular form may also include a plurality of elements.

Although the detailed description of the present invention illustrates specific embodiments, various modifications in form and detail may be made therein without departing from the scope of the present invention. Accordingly, the scope of the present invention should not be limited by the foregoing embodiments but be defined by the appended claims and equivalents thereto.

## Claims

1. A method performed by a base station in a wireless communication system, the method comprising:
transmitting a control message including configuration information associated with a coordinated cell group (CCG) including a plurality of cells capable of performing layer 1 and layer 2 handover when a terminal moves between cells, the configuration information including information of the plurality of cells included in the CCG; and
receiving measurement report for the CCG from the terminal in case that measurement for the CCG is performed by the terminal and a reporting condition for the measurement is satisfied.

2. The method of claim 1, wherein the CCG includes a plurality of cells that is synchronized and supports ideal backhaul for the terminal, or includes a plurality of cells corresponding to a distributed unit (DU).

3. The method of claim 1, further comprising:
transmitting at least one of measurement reporting criteria information for the CCG and parameter information for the measurement report to the terminal,
wherein whether the reporting condition for the measurement is satisfied is determined based on at least one of the measurement reporting criteria information and the parameter information for the measurement report.

4. A method performed by a terminal that supports multiple input multiple output (MIMO) in a wireless communication system, the method comprising:
receiving a control message including configuration information associated with a coordinated cell group (CCG) including a plurality of cells capable of performing layer 1 and layer 2 handover when the terminal moves between cells, the configuration information including information of the plurality of cells included in the CCG;
performing measurement for the CCG based on the configuration information; and
transmitting measurement report for the CCG to the base station in case that the measurement for the CCG is performed and a reporting condition for the measurement is satisfied.

5. The method of claim 4, wherein the CCG includes a plurality of cells that is synchronized and supports ideal backhaul for the terminal, or includes a plurality of cells corresponding to a distributed unit (DU).

6. The method of claim 4, further comprising:
receiving at least one of measurement reporting criteria information for the CCG and parameter information for the measurement report from the base station,
wherein whether the reporting condition for the measurement is satisfied is determined based on at least one of the measurement reporting criteria information and the parameter information for the measurement report.

7. The method of claim 4, wherein the performing of the measurement for the CCG comprises:
performing layer 1 filtering based on signals transmitted from the plurality of cells included in the CCG;
determining a single CCG quality measurement value based on parameter information configured to the terminal for the measurement report for the layer 1 filtering result; and
performing layer 3 filtering based on the single CCG quality measurement value.

8. A base station in a wireless communication system, comprising:
a transceiver; and
a controller configured to control a control message including configuration information associated with a coordinated cell group (CCG) including a plurality of cells capable of performing layer 1 and layer 2 handover when a terminal moves between cells to be transmitted to the terminal through the transceiver, the configuration information including information of the plurality of cells included in the CCG, and to control measurement report for the CCG to be received from the terminal through the transceiver in case that measurement for the CCG is performed by the terminal and a reporting condition for the measurement is satisfied.

9. The base station of claim 8, wherein the CCG includes a plurality of cells that is synchronized and supports ideal backhaul for the terminal, or includes a plurality of cells corresponding to a distributed unit (DU).

10. The base station of claim 8, wherein the controller is configured to transmit, via the transceiver, at least one of measurement reporting criteria information for the CCG and parameter information for the measurement report to be transmitted to the terminal, and
whether the reporting condition for the measurement is satisfied is determined based on at least one of the measurement reporting criteria information and the parameter information for the measurement report.

11. The base station of claim 8, wherein, if layer 1 filtering is performed based on signals transmitted from the plurality of cells included in the CCG and a single CCG quality measurement value is determined based on parameter information configured to the terminal for the measurement report for the layer 1 filtering result, the measurement for the CCG is performed by the terminal by performing layer 3 filtering based on the single CCG quality measurement value.

12. A terminal that supports multiple input multiple output (MIMO) in a wireless communication system, the terminal comprising:
a transceiver; and
a controller configured to control the terminal to receive a control message including configuration information associated with a coordinated cell group (CCG) including a plurality of cells capable of performing layer 1 and layer 2 handover from the base station through the transceiver when moving between cells, the configuration information including information of the plurality of cells included in the CCG, to perform measurement for the CCG based on the configuration information, and to transmit measurement report for the CCG to the base station in case that the measurement for the CCG is performed and a reporting condition for the measurement is satisfied.

13. The terminal of claim 12, wherein the CCG includes a plurality of cells that is synchronized and supports ideal backhaul for the terminal, or includes a plurality of cells corresponding to a distributed unit (DU).

14. The terminal of claim 12, wherein the controller is configured to receive via the transceiver at least one of measurement reporting criteria information for the CCG and parameter information for the measurement report from the base station, and
whether the reporting condition for the measurement is satisfied is determined based on at least one of the measurement reporting criteria information and the parameter information for the measurement report.

15. The terminal of claim 12, wherein the controller is configured to control the terminal to perform layer 1 filtering based on signals transmitted from the plurality of cells included in the CCG, to determine a single CCG quality measurement value based on parameter information configured to the terminal for the measurement report for the layer 1 filtering result, and to perform layer 3 filtering based on the single CCG quality measurement value.
